(19) **Europäisches Patentamt / European Patent Office / Office européen des brevets**

(11) **EP 3 689 445 A1**

(12) **EUROPEAN PATENT APPLICATION**
published in accordance with Art. 153(4) EPC

(43) Date of publication:
**05.08.2020 Bulletin 2020/32**

(21) Application number: **18861186.7**

(22) Date of filing: **28.09.2018**

(51) Int Cl.:
**B01D 69/08** (2006.01)    **B01D 69/00** (2006.01)
**B01D 69/02** (2006.01)    **B01D 69/10** (2006.01)
**B01D 69/12** (2006.01)    **B01D 71/12** (2006.01)
**B01D 71/32** (2006.01)    **B01D 71/40** (2006.01)
**B01D 71/44** (2006.01)    **D06M 15/07** (2006.01)
**D06M 15/227** (2006.01)    **D06M 15/263** (2006.01)

(86) International application number:
**PCT/JP2018/036543**

(87) International publication number:
**WO 2019/066061 (04.04.2019 Gazette 2019/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2017   JP 2017188107
26.06.2018   JP 2018120565**

(71) Applicant: **Toray Industries, Inc.
Tokyo 103-8666 (JP)**

(72) Inventors:
• **YASUDA Takaaki**
  Otsu-shi
  **Shiga 520-8558 (JP)**
• **KOBAYASHI Kentaro**
  Otsu-shi
  **Shiga 520-8558 (JP)**

(74) Representative: **Hoefer & Partner Patentanwälte mbB
Pilgersheimer Straße 20
81543 München (DE)**

(54) **POROUS HOLLOW FIBER MEMBRANE AND METHOD FOR PRODUCING SAME**

(57)    The present invention provides a porous hollow fiber membrane suitable for the removal of minute substances, e.g., viruses, contained in a liquid. The present invention relates to a porous hollow fiber membrane which is provided with a separation-functioning layer containing a fluororesin, has a gas diffusion amount of 0.5 to 5.0 mL/m²/hr as measured in a diffusion test, and also has foaming points at a density of 0.005 to 0.2 point/cm² as measured in a foaming test under the immersion in 2-propanol.

EP 3 689 445 A1

**Description**

TECHNICAL FIELD

The present invention relates to a porous hollow fiber membrane and a method for producing the same.

BACKGROUND ART

In recent years, in the drinking water production field or the industrial water production field, namely in a water treatment field such as water purification treatment usage, waste water treatment usage, and seawater desalination usage, a separation membrane has been being used as an alternative to conventional sand filtration, coagulating sedimentation, or evaporation, or for enhancing the quality of treated water.

The separation membrane is required to have, in addition to excellent pure-water permeation performance and separation performance, chemical durability such that it can withstand chemical cleaning and physical strength such that breakage does not occur during use. For this reason, use of a separation membrane containing a fluororesin having both chemical durability and physical strength is spreading.

In addition, as for the separation membrane, a membrane corresponding to the size of a separation target substance contained in water to be treated, is used. For example, natural water contains a plenty of suspended components, and therefore, a microfiltration membrane or an ultrafiltration membrane, which is suitable for removal of the suspended components, is generally used. However, nowadays, with a background of strengthening of regulations regarding water quality, or the like, necessity for sufficient removal of viruses having a smaller particle size than the suspended components is being increased.

As a treatment method of viruses, an inactivation method such as heating treatment, chemical treatment with chlorine or the like, and ultraviolet treatment, is generally adopted. But, as for the heating treatment or chemical treatment, its effect is weak against viruses having heat resistance or chemical resistance. In addition, as for the ultraviolet treatment, viruses which are reactivated with visible light are reported. Then, as a treatment method which does not reply upon characteristics of respective viruses, membrane filtration with a separation membrane having a finer pore diameter than a conventional membrane has come to attract attention. As for the membrane filtration, it is possible to physically remove viruses having a particle diameter larger than the pore diameter, and there are a lot of advantages such as a fast separation speed and disuse of mixing of impurities.

As for the kind of virus, examples of smallest viruses include a parvovirus and a poliovirus each having a diameter of 20 to 30 nm. In addition, examples of pathogenic viruses in water include a norovirus having a diameter of 25 to 35 nm and an adenovirus having a diameter of 70 to 90 nm. As separation membranes for removal of such a virus group, there are disclosed a variety of separation membranes.

For example, Patent Literature 1 discloses a separation membrane being a porous hollow fiber membrane for medical usage, being made of a polyvinylidene fluoride resin, having a maximum pore diameter of 10 to 100 nm determined by the bubble point method, and having a thickness of the fine structure layer of 50% or more of the whole membrane thickness, whereby the separation membrane exhibits high virus removal performance.

Patent Literature 2 discloses a separation membrane being a porous hollow fiber membrane for medical usage, being made of cellulose, and being capable of capturing a gold colloid having a diameter of 20 to 30 nm, the value of which is substantially the same as a particle diameter of the virus, whereby the separation membrane is capable of removing a virus from a solution containing a protein.

Patent Literature 3 discloses a separation membrane being a porous hollow fiber membrane usable for water treatment usage; containing a hydrophobic polymer and a hydrophilic polymer; having a dense layer on the inner surface and the outer surface; having a characteristic structure in which a porosity initially increases from the inner surface toward the outer surface, and after passing through at least one maximum part, the porosity decreases at the outer surface side; and having a specific relation between the pore diameter of the inner surface and the exclusion limit particle diameter.

CITATION LIST

PATENT LITERATURE

Patent Literature 1: WO 2003/026779 A
Patent Literature 2: WO 2015/156401 A
Patent Literature 3: JP 2007-289886 A

## SUMMARY OF INVENTION

## TECHNICAL PROBLEM

However, the porous hollow fiber membrane disclosed in Patent Literature 1 is formed of a single layer of a continuous structure including a coarse structure and furthermore, has a thin membrane thickness. In consequence, the physical strength per a hollow fiber membrane is low and there is a concern about mixing of raw water in filtrated water due to membrane breakage, and therefore, the porous hollow fiber membrane disclosed in Patent Literature 1 cannot be applied for water treatment usage. In addition, since the fine structure layer is too thick, nonetheless the membrane thickness is thin, the pure-water permeation performance is low.

As for the porous hollow fiber membrane disclosed in Patent Literature 2, in view of the fact that the cellulose that is not excellent in physical strength and chemical resistance is the main component, there is a concern about mixing of raw water in filtrated water due to membrane breakage, and moreover it is difficult to maintain the virus removal performance in the water treatment usage requiring periodic chemical cleaning for the purpose of dissolving pore blockage by biofouling, etc.

Though the porous hollow fiber membrane disclosed in Patent Literature 3 has a dense layer on the inner surface and the outer surface, its pore diameter is 0.01 to 1 $\mu$m and is not a pore diameter that can sufficiently remove micro objects such as a virus.

An object of the present invention is to provide a porous hollow fiber membrane which includes a fluororesin having excellent chemical resistance, is suitable for filtration of micro objects such as a virus, and has excellent pure-water permeation performance, and to provide a method for producing the same.

## SOLUTION TO PROBLEM

In order to solve the above-described problem, the present inventors made extensive and intensive investigations. As a result, with respect to a porous hollow fiber membrane containing a fluororesin having excellent chemical durability, they have successfully obtained a separation functional layer capable of making both excellent virus removal performance and pure-water permeation performance compatible with each other, by solidifying a thoroughly defoamed separation functional layer raw liquid at a low temperature to form especially a three-dimensional network structure.

Furthermore, the present inventors have developed a porous hollow fiber membrane which is excellent in chemical durability and physical strength and is capable of making both pure-water permeation performance and virus removal performance compatible with each other, by providing a multilayer structure of the above-described separation functional layer and a supporting layer capable of making both high pure-water permeation performance and physical strength compatible with each other. Specifically, the present invention provides the following techniques.

[1] A porous hollow fiber membrane including a separation functional layer containing a fluororesin, the porous hollow fiber membrane having:

a gas diffusion amount of 0.5 to 5.0 mL/m$^2$/hr in a diffusion test; and
the number of foaming points of 0.005 to 0.2 per cm$^2$ in a foaming test under an immersion with 2-propanol.

[2] The porous hollow fiber membrane as set forth in [1], in which the separation functional layer has a three-dimensional network structure.

[3] The porous hollow fiber membrane as set forth in [1] or [2], in which the separation functional layer has a thickness of 15 $\mu$m or more.

[4] The porous hollow fiber membrane as set forth in any of [1] to [3], in which:

the separation functional layer includes a dense layer on either one of surfaces thereof in a thickness direction;
the separation functional layer has an average pore diameter X in a site of 1 $\mu$m to 2 $\mu$m far in the thickness direction from the surface at the dense layer side and an average pore diameter Y in a site of 5 $\mu$m to 6 $\mu$m far in the thickness direction from the surface at the dense layer side; and
X and Y satisfy a relation of $1.5 \leq Y/X \leq 5$.

[5] The porous hollow fiber membrane as set forth in any of [1] to [4], in which the separation functional layer has an average surface pore diameter of 3 nm to 20 nm.

[6] The porous hollow fiber membrane as set forth in any of [1] to [5], in which the separation functional layer contains at least one hydrophilic polymer selected from the group consisting of a polyvinylpyrrolidone-based resin, an acrylic resin, and a cellulose ester-based resin.

[7] The porous hollow fiber membrane as set forth in [6], in which the hydrophilic polymer in the separation functional layer has a mass ratio of 1 to 40% by mass.

[8] The porous hollow fiber membrane as set forth in any of [1] to [7], further including a supporting layer.

[9] The porous hollow fiber membrane as set forth in [8], in which the supporting layer contains a fluororesin.

[10] A method for producing a porous hollow fiber membrane, including:

(1) a step of defoaming a separation functional layer raw liquid containing a fluororesin and having a viscosity of 20 to 500 Pa·sec, to prepare a separation functional layer raw liquid having a coefficient of variation of $OD_{600}$ of 5% or less; and

(2) a step of applying the separation functional layer raw liquid on a surface of a supporting layer, immersing the separation functional layer raw liquid in a solidification bath at -5 to 35°C, and thus forming a separation functional layer having a three-dimensional network structure by a non-solvent induced phase separation method, the separation functional layer including a dense layer on either one of surfaces thereof in a thickness direction, having a gas diffusion amount of 0.5 to 5.0 mL/m$^2$/hr in a diffusion test, and having the number of foaming points of 0.005 to 0.2 per cm$^2$ in a foaming test under an immersion with 2-propanol.

[11] The method for producing a porous hollow fiber membrane as set forth in [10], in which:

the separation functional layer raw liquid contains at least one hydrophilic polymer selected from the group consisting of a polyvinylpyrrolidone-based resin, an acrylic resin, and a cellulose ester-based resin; and

the separation functional layer raw liquid has a mass ratio between the fluororesin and the hydrophilic polymer in a range of 60/40 to 99/1.

ADVANTAGEOUS EFFECTS OF INVENTION

According to the present invention, a porous hollow fiber membrane having excellent chemical resistance and capable of making both pure-water permeation performance and virus removal performance compatible with each other is provided. In the present invention, by further providing a supporting layer, a porous hollow fiber membrane which is also excellent in physical strength is provided.

BRIEF DESCRIPTION OF DRAWINGS

[FIG. 1] FIG. 1 is a photograph of a cross section vertical to the longitudinal direction of the porous hollow fiber membrane of Example 7.

[FIG. 2] FIG. 2 is a graph showing measurement results of $OD_{600}$ of the separation functional layer raw liquids of Example 6 and Comparative Example 1.

DESCRIPTION OF EMBODIMENTS

1. Porous Hollow Fiber Membrane

(1-1) Fluororesin

The porous hollow fiber membrane of the present invention contains a fluororesin. The "fluororesin" as referred to in this specification means polyvinylidene fluoride (hereinafter referred to as "PVDF") or a vinylidene fluoride copolymer.

The "vinylidene fluoride copolymer" as referred to herein means a polymer having a vinylidene fluoride residue structure, and examples thereof include a copolymer of a vinylidene fluoride monomer and another fluorine-based monomer or the like. Examples of the fluorine-based monomer other than the vinylidene fluoride monomer include vinyl fluoride, tetrafluoroethylene, hexafluoropropylene, and chlorotrifluoroethylene.

From the viewpoint of pure-water permeation performance, separation performance, formability, etc. of the resulting porous hollow fiber membrane, a weight average molecular weight of the fluororesin is preferably 50,000 to 1,600,000, more preferably 100,000 to 1,200,000, and still more preferably 150,000 to 1,000,000.

In the case where the porous hollow fiber membrane contains a fluororesin, a porous hollow fiber membrane having excellent chemical resistance, which is capable of being subjected to chemical cleaning with an acid such as hydrochloric acid, citric acid, and oxalic acid, chlorine, a surfactant, etc., is obtained.

(1-2) Separation Functional Layer

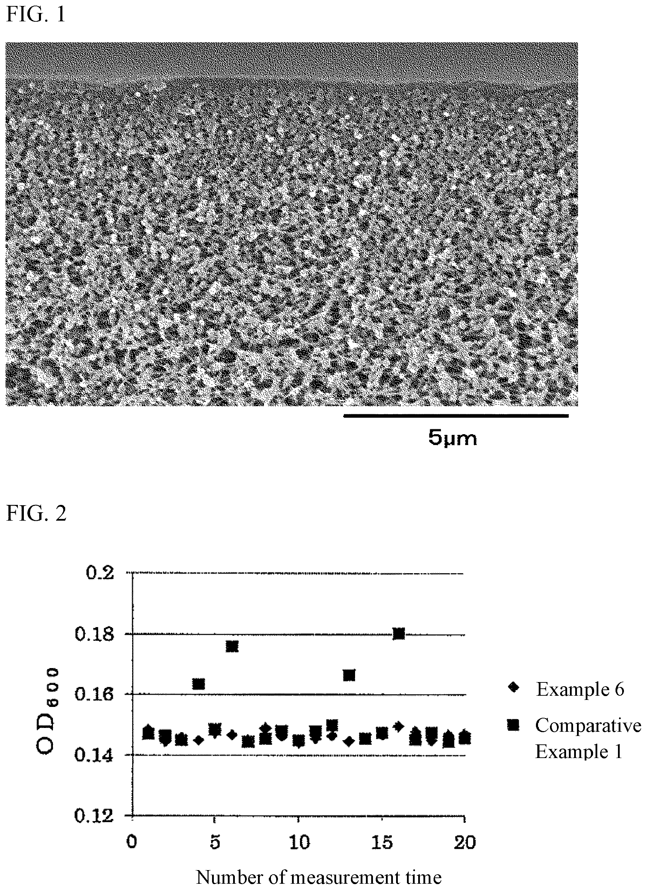

The porous hollow fiber membrane of the present invention includes a separation functional layer containing a fluororesin. In addition, it is preferred that the separation functional layer has a three-dimensional network structure. The "three-dimensional network structure" as referred to herein means a structure in which solid components spread three-dimensionally as shown in FIG. 1.

In order to make both the virus removal performance and the pure-water permeation performance compatible with each other in a high level, an average surface pore diameter of the separation functional layer is preferably 3 to 20 nm, and more preferably 5 to 15 nm. In the case where the average surface pore diameter of the separation functional layer is more than 20 nm, the number of pores larger than the particle diameter of viruses increase, and therefore, the sufficient virus removal performance may not be obtained. On the other hand, in the case where the average surface pore diameter of the separation functional layer is less than 3 nm, a transmembrane pressure difference at the time of filtration becomes large, and therefore, the sufficient pure-water permeation performance may not be obtained.

A thickness of the separation functional layer is preferably 15 $\mu$m or more, more preferably 15 to 300 $\mu$m, still more preferably 20 to 200 $\mu$m, and especially preferably 30 to 100 $\mu$m. In the case where the thickness of the separation functional layer is less than 15 $\mu$m, viruses are liable to pass through the separation functional layer, and the sufficient virus removal performance may not be obtained. On the other hand, in the case where the thickness of the separation functional layer is more than 300 $\mu$m, the transmembrane pressure difference at the time of filtration becomes large, and therefore, the sufficient pure-water permeation performance may not be obtained.

The separation functional layer includes a dense layer on either one of the surfaces in the thickness direction, and an average pore diameter X in a site of 1 to 2 $\mu$m far in the thickness direction from the surface at the dense layer side and an average pore diameter Y in a site of 5 to 6 $\mu$m far in the thickness direction from the surface at the dense layer side preferably satisfy a relation of $1.5 \leq Y/X \leq 5$, and more preferably satisfy a relation of $2 \leq Y/X \leq 4$.

The "dense layer" as referred to herein is defined as a thin layer having an average pore diameter of 100 nm or less when a cross section vertical to the longitudinal direction of the porous hollow fiber membrane is photographed continuously from the outer surface to the inner surface of the separation functional layer with a scanning electron microscope at a magnification of 10,000 times and divided into thin layers of 0.5 $\mu$m in the thickness direction from the outer surface to the inner surface of the separation functional layer, and the diameters of the randomly selected 10 or more pores in each thin layer are measured.

The case where the average pore diameter X in the vicinity of the surface at the dense layer side and the average pore diameter Y of the inner layer satisfy a relation of $1.5 \leq Y/X \leq 5$ means that asymmetry of the separation functional layer is appropriately controlled for the purpose of making both the virus removal performance and the pure-water permeation performance compatible with each other in a high level. In the case of $Y/X \leq 5$, namely in the case where the asymmetry of the separation functional layer is not excessively large, a structure where regions having a small pore diameter connect to each other in the thickness direction is provided, and completeness of excellent virus removal can be exhibited owing to depth filtration. On the other hand, in the case of $Y/X \geq 1.5$, namely in the case where the asymmetry of the separation functional layer is not excessively small, the transmembrane pressure difference at the time of filtration can be suppressed, and a high pure-water permeation performance is obtained.

As for the separation functional layer, when the polymer concentration is high, the structure of the separation functional layer becomes dense, and a membrane with high separation performance is obtained. Conversely, when the polymer concentration is low, the porosity of the separation functional layer becomes large, and the pure-water permeation performance is enhanced. For this reason, the concentration of the fluororesin is preferably 8 to 30% by mass, and more preferably 10 to 20% by mass.

In the case where the separation functional layer further contains a hydrophilic polymer in addition to the fluororesin, the pure-water permeation performance and contamination resistance of the porous hollow fiber membrane are enhanced, and hence, such a case is more preferred. The "hydrophilic polymer" as referred to herein means a polymer having high affinity with water such that it is dissolved in water, or its contact angle against water is 90° or less. Examples of the hydrophilic polymer include a polyvinylpyrrolidone-based resin, polyethylene glycol, polyvinyl alcohol, an acrylic resin such as polyacrylic acid and polymethyl methacrylate (hereinafter referred to as "PMMA"), a cellulose ester-based resin such as cellulose acetate (hereinafter referred to as "CA"), polyacrylonitrile, polysulfone, and a hydrophilized polyolefin-based resin resulting from copolymerization of an olefin-based monomer such as ethylene, propylene, and vinylidene fluoride with a hydrophilic group. Above all, at least one hydrophilic polymer selected from the group consisting of a polyvinylpyrrolidone-based resin, an acrylic resin, and a cellulose ester-based resin is preferred from the viewpoint of enhancement in contamination resistance.

The "polyvinylpyrrolidone-based resin" as referred to herein means a homopolymer of vinylpyrrolidone, or a copolymer of vinylpyrrolidone and another vinyl-based monomer. From the viewpoint of pure-water permeation performance, separation performance, formability, etc. of the resulting porous hollow fiber membrane, a weight average molecular weight of the polyvinylpyrrolidone-based resin is preferably 10,000 to 5,000,000.

Examples of the acrylic resin include a polymer of an acrylic ester and a polymer of a methacrylic ester.

Examples of the polymer of an acrylic ester include a homopolymer of an acrylic ester monomer such as methyl acrylate, ethyl acrylate, n-butyl acrylate, iso-butyl acrylate, tert-butyl acrylate, 2-ethylhexyl acrylate, glycidyl acrylate, hydroxyethyl acrylate, and hydroxypropyl acrylate; a copolymer of such a monomer; and a copolymer of such a monomer and another vinyl monomer.

Examples of the polymer of a methacrylic ester include a homopolymer of a methacrylic ester monomer such as methyl methacrylate, ethyl methacrylate, n-butyl methacrylate, iso-butyl methacrylate, tert-butyl methacrylate, 2-ethylhexyl methacrylate, glycidyl methacrylate, hydroxyethyl methacrylate, and hydroxypropyl methacrylate; a copolymer of such a monomer; and a copolymer of such a monomer with another vinyl monomer.

From the viewpoint of mechanical strength or chemical durability, a weight average molecular weight of the acrylic resin is preferably 100,000 to 5,000,000, and more preferably 300,000 to 4,000,000.

The "cellulose ester-based resin" as referred to herein means one having a cellulose ester as a molecular unit in a main chain and/or a side chain. Examples of a homopolymer including only a cellulose ester as the molecular unit include cellulose acetate, cellulose acetate propionate, and cellulose acetate butyrate. Examples of other molecular unit than the cellulose ester include an alkene such as ethylene and propylene, an alkyne such as acetylene, a vinyl halide, a vinylidene halide, methyl methacrylate, and methyl acrylate. Ethylene, methyl methacrylate, or methyl acrylate is preferred because it is not only easily available but also readily introduced into the main chain and/or the side chain by a known polymerization method.

The cellulose ester-based resin is used for the purpose of forming the separation functional layer together with the fluororesin, and therefore, it is preferred that cellulose ester-based resin is mixed with the fluororesin under an appropriate condition. Furthermore, in the case where the cellulose ester-based resin and the fluororesin are mixed with each other and dissolved in a good solvent for the fluororesin, handling becomes easy, and hence, such a case is especially preferred.

When a part of the ester of the cellulose ester-based resin is hydrolyzed, a hydroxy group having higher hydrophilicity than the ester is produced. When a proportion of the hydroxy group becomes large, though miscibility with the fluororesin which is hydrophobic is lowered, hydrophilicity of the resulting porous hollow fiber membrane increases, and the pure-water permeation performance and contamination resistance are enhanced. In consequence, a method for hydrolyzing the ester within a range of mixing with the fluororesin can be preferably adopted from the viewpoint of enhancement in membrane performance.

In the case of containing the hydrophilic polymer in the separation functional layer, a mass ratio of the hydrophilic polymer in the separation functional layer is preferably 1 to 40% by mass, more preferably 5 to 35% by mass, and still more preferably 10 to 30% by mass. When the foregoing mass ratio is 1% by mass or more, the pure water-permeation performance and the contamination resistance become favorable. When the mass ratio is 40% by mass or less, the chemical resistance of the porous hollow fiber membrane becomes favorable.

(1-3) Supporting Layer

The porous hollow fiber membrane of the present invention may be a single-layer membrane including the above-described separation functional layer alone. In order to enhance the physical strength while maintaining the permeation performance of the whole of the porous hollow fiber membrane, it is more preferred that the porous hollow fiber membrane of the present invention has a multilayer structure in which the separation functional layer and the supporting layer are laminated.

As a material of the supporting layer, for example, a fluororesin, a polysulfone-based resin, a polyacrylonitrile-based resin, a polyolefin-based resin such as polypropylene, a hydrophilized polyolefin-based resin, such as hydrophilized polyethylene, a cellulose ester-based resin, a polyester-based resin, a polyamide-based resin, and a polyether sulfone-based resin are preferably used, and copolymers of such a resin and a material resulting from introduction of a substituent into a part of such a resin may also be used. In addition, a fibrous substance or the like may also be contained as a reinforcing agent in such a resin.

In order to increase the chemical durability along with the physical strength, it is more preferred to use a fluororesin as the material of the supporting layer. In order to make a balance between strength-elongation and pure-water permeation performance of the porous hollow fiber membrane suitable, a weight average molecular weight of the fluororesin is preferably 50,000 to 1,600,000. In the case of water treatment usage in which the porous hollow fiber membrane is exposed to chemical cleaning, the weight average molecular weight is more preferably 100,000 to 700,000, and further preferably 150,000 to 600,000.

From the viewpoint of pure-water permeation performance and physical strength, it is preferred that the supporting layer is formed of a spherical structure, or a columnar structure in which the supporting layer is oriented in the longitudinal direction of the porous hollow fiber membrane. The spherical structure as referred to herein means a structure in which a large number of solid components having a spherical shape (including an approximately spherical shape) are connected to each other while being partially joined with each other. The spherical solid component as referred to herein means a solid component having an aspect ratio (long-side length)/(short-side length) of less than 3. In general, though the spherical structure is large in pore diameter as compared with the three-dimensional network structure and is inferior in separation performance, it is excellent in pure-water permeation performance and physical strength, and therefore, it is suitable as the supporting layer.

Meanwhile, the columnar structure as referred to herein means a structure in which a large number of solid components having a columnar shape are connected to each other while being partially joined with each other. The columnar solid component as referred to herein means a solid component having an aspect ratio (long-side length)/(short-side length) of 3 or more. The columnar structure in which the columnar solid components are oriented in the longitudinal direction of the porous hollow fiber membrane is more excellent in physical strength than the spherical structure. The phrase "oriented in the longitudinal direction" as referred to herein means that in angles between the longitudinal direction of the columnar solid component and the longitudinal direction of the porous hollow fiber membrane, the acute angle is within 20°. The supporting layer having a columnar structure may include the above-described spherical structure in a part thereof.

In order that the supporting layer makes both high pure-water permeation performance and sufficient physical strength compatible with each other, the short-side length of the spherical solid component or the columnar solid component is preferably 0.5 to 3.0 $\mu$m, and more preferably 1.0 to 2.5 $\mu$m. In the case where the short-side length is less than 0.5 $\mu$m, the physical strength of a solid component alone may become small. On the other hand, in the case where the short-side length is more than 3.0 $\mu$m, a void between the solid components becomes small, and therefore, the pure-water permeation performance may become low.

In addition, in order to make both the pure-water permeation performance and the physical strength compatible with each other in a high level, it is preferred that the supporting layer has a homogeneous structure. In the case where the supporting layer has partially a dense layer, or the structure changes in inclination, it may become difficult to make both the pure-water permeation performance and the physical strength compatible with each other.

It is preferred that the separation functional layer and the supporting layer have a laminated multilayer structure in order to keep balance regarding the performances of each of the layers in a high level. In general, when layers are stacked in multistage, the pure-water permeation performance is lowered at an interface of each layer because the layers interpenetrate and become dense. When the layers do not interpenetrate, though the permeation performance is not lowered, the adhesive strength is lowered. In consequence, a smaller number of laminated layers is preferred, and it is most preferred to be composed of two layers in total of one separation functional layer and one supporting layer. Although any one of them may be an outer layer or an inner layer, the separation functional layer is preferably disposed at the side of a separation target, because the separation functional layer takes on a role of a separation function, and the supporting layer takes on a role of a physical strength.

A thickness of the supporting layer is preferably 100 to 400 $\mu$m, and more preferably 150 to 300 $\mu$m. In the case where the thickness of the supporting layer is less than 100 $\mu$m, the physical strength may become low. On the other hand, in the case where it is more than 400 $\mu$m, the pure-water permeation performance may be lowered.

(1-4) Gas Diffusion Amount, Foaming Point, and Bubble Point Pressure

As for the pore diameter of the porous hollow fiber membrane having high virus removal performance, the present inventors have found that two important conditions are existent. That is, the conditions are concerned with the requirement that the average surface pore diameter is small relative to the particle diameter (about 25 nm) of the virus which is the separation target; and the requirement that the number of a large-pore diameter surface pore having a pore diameter of about 100 nm, which is largely different from the average surface pore diameter, namely the number of the foaming point as mentioned in this specification, is thoroughly small.

In general, a porous hollow fiber membrane for water treatment is used for usage of mainly removing suspended components in water, which have a particle diameter of 100 nm or more. Therefore, from the viewpoint of suppressing the transmembrane pressure difference to increase the pure-water permeation performance, a porous hollow fiber membrane having an average surface pore diameter of about several ten to several hundred nm is preferably used. In addition, in view of the fact that a level required for completeness of removal is not high, even if large-pore diameter surface pores which are largely different from the average surface pore diameter are existent to some extent, no serious problem is caused. However, the present invention is aimed to remove micro objects such as a virus having a particle diameter smaller than that in a high level. Therefore, it is required not only that the average surface pore diameter is dense, but also that the number of the large-pore diameter surface pores is sufficiently small, as compared with the general porous hollow fiber membranes for water treatment.

In the case where the average surface pore diameter is same level with or larger than the particle diameter of the virus, the removal performance is lowered as a whole. On the other hand, in the case where the large-pore diameter surface pores that are much larger than the particle diameter of the virus are existent to some extent, the virus is locally leaked from the large-pore diameter surface pores, resulting in a serious influence against the removal performance of the entire membrane. For example, even if 99% of the entire membrane has a virus removal performance of 7log (99.99999%), when only 1% of a large-pore diameter surface pore having a virus removal performance of only 2log (99%) is existent, the virus removal performance of the entire membrane is lowered to less than 4log (99.99%). However, while the large-pore diameter surface pore lowers the virus removal performance, it increases the pure-water permeation performance, and therefore, it is preferred that a small amount of the large-pore diameter surface pores are existent within a range where the virus removal performance is not excessively lowered.

As a method for judging the matter that the above-described two requirements are satisfied, the present inventors have found that a combination of the diffusion test and the foaming test under a wetting condition with 2-propanol or the bubble point test is effective.

The diffusion test as referred to herein is a test method in which by thoroughly wetting the porous hollow fiber membrane with a liquid and applying an air pressure of less than the bubble point pressure from the primary side of the membrane, the flow amount of a gas diffused into the secondary side owing to dissolution (gas diffusion amount) is measured. The gas diffusion amount correlates with an area of the surface pore, and when the gas diffusion amount is 5 mL/m$^2$/hr or less, it can be judged that the average surface pore diameter is small relative to the particle diameter of the virus.

The foaming test or the bubble point test as referred to herein is a test method in which by thoroughly wetting the porous hollow fiber membrane with a liquid and applying an air pressure from the inside of the membrane, foams generated from the membrane surface are detected. The foaming test is a method in which by applying a certain air pressure, the number of generation points of foams (foaming point) is determined, whereas the bubble point test is a method in which by gradually increasing an air pressure, a pressure (bubble point pressure) when a foam is first generated from the membrane surface is determined.

According to the foaming test, the number of large-pore diameter surface pores (foaming points) of the membrane having a surface pore diameter of a certain value or more can be determined, and according to the bubble point test, the maximum surface pore diameter of the membrane can be determined. Both of these tests are suitable for detecting large-pore diameter surface pores which are extremely different from the average surface pore diameter. Among them, the foaming test in which the frequency of generation of a large-pore diameter surface pore having low virus removal performance can be quantitatively determined is more preferred from the viewpoint of obtaining a more favorable correlation with the virus removal performance.

In general, in the hollow fiber membrane for water treatment, the foaming test or the bubble point test is often performed under immersion with water. However, in these tests, the detectable surface pore diameter is in proportion to the surface tension of a liquid for immersion, and therefore, in the case of a liquid having a large surface tension such as water, it is difficult to measure a dense surface pore diameter suitable for the particle diameter of micro objects such as a virus which are intended to be removed.

Actually, in the case of subjecting the porous hollow fiber membrane of the present invention to the foaming test under immersion with water, under a pressure of 300 kPa, only large-pore diameter surface pores of about 300 nm which are extremely different from the particle diameter of a virus can be detected, and a sufficient correlation with the virus removal performance is not obtained. In order to detect a foaming point having a surface pore diameter of about 100 nm under immersion with water, it is needed to apply a pressure of about 900 kPa. However, from the standpoint of pressure resistance of the porous hollow fiber membrane, it is substantially impossible to apply such a high pressure under a non-destructive condition.

Then, in the present invention, the foaming test is carried out by applying an air pressure of 300 kPa to the porous hollow fiber membrane containing a fluororesin under immersion with 2-propanol having a small surface tension, thereby detecting the foaming point having a surface pore diameter of about 100 nm. In addition to this, by carrying out the diffusion test capable of measuring the gas diffusion amount which correlates with the above-described average surface pore diameter, a high correlation of such evaluation results with the virus removal performance of the porous hollow fiber membrane is found out.

In the porous hollow fiber membrane of the present invention, the gas diffusion amount in the diffusion test is required to be 0.5 to 5.0 mL/m$^2$/hr. The gas diffusion amount is preferably 0.7 to 2.0 mL/m$^2$/hr. In the case where the gas diffusion amount is less than 0.5 mL/m$^2$/hr, the average surface pore diameter is too small, so that a sufficient pure-water permeation performance is not obtained. Conversely, when the gas diffusion amount is more than 5.0 mL/m$^2$/hr, the average surface pore diameter is excessively large, so that the sufficient virus removal performance is not obtained.

In the porous hollow fiber membrane of the present invention, the number of foaming points in the foaming test under immersion with 2-propanol while applying an air pressure of 300 kPa is required to be 0.005 to 0.2 per cm$^2$. The number of foaming points is preferably 0.01 to 0.1 per cm$^2$. In the case where the number of foaming points is less than 0.005 per cm$^2$, the pure-water permeation performance becomes slightly low. Conversely, in the case where the number of foaming points is more than 0.2 per cm$^2$, the number of large-pore diameter surface pores from which the virus is locally leaked increases, and therefore, the sufficient virus removal performance is not obtained.

Furthermore, in the porous hollow fiber membrane of the present invention, the bubble point pressure in the bubble point test under immersion with 2-propanol is preferably 200 kPa or more, and more preferably 300 kPa or more.

In the case where the bubble point pressure is less than 200 kPa, the number of large-pore diameter surface pores from which the virus is locally leaked increases, and therefore, the sufficient virus removal performance may not be obtained.

(1-5) Others

In the porous hollow fiber membrane of the present invention, in the case of using an MS-2 phage as a test virus, a virus removal performance is preferably 4log or more, more preferably 5log or more, and still more preferably 7log or more. The virus removal performance is calculated from the MS-2 phage concentration in a raw liquid and a filtrate according to the following expression (1).

$$\text{Virus removal performance (log)} = -\log_{10}\{(\text{MS-2 phage concentration in filtrate})/(\text{MS-2 phage concentration in raw liquid})\} \qquad (1)$$

The sentence "the virus removal performance is 4log or more" as referred to herein means that the virus can be removed to an extent of 99.99% or more by means of filtration. The phrase "99.99% or more" is the regulations for virus removal or inactivation by the water purification treatment which The U.S. Environmental Protection Agency (EPA) requires. If the purified water which do not satisfy the foregoing regulations is provided as drinking water, etc., it is suggested that in the worst case there is a risk of occurrence of herd infection by a pathogenic virus.

In the porous hollow fiber membrane of the present invention, from the viewpoint of making both high pure-water permeation performance and high strength-elongation performance compatible with each other, it is preferred that a pure-water permeation performance at 50 kPa and 25°C is 0.08 $m^3/m^2$/hr or more, a breaking strength at 25°C is 6 MPa or more, and a breaking elongation at 25°C is 15% or more. Furthermore, in the porous hollow fiber membrane of the present invention, it is more preferred that the pure-water permeation performance at 50 kPa and 25°C is 0.15 $m^3/m^2$/hr or more, the breaking strength at 25°C is 8 MPa or more, and the breaking elongation at 25°C is 20% or more.

Although the dimension or shape of the porous hollow fiber membrane is not limited to a specific form, taking into consideration the pressure resistance, etc. of the porous hollow fiber membrane, its outer diameter is preferably 0.3 to 3.0 mm.

2. Production Method of Porous Hollow Fiber Membrane

A production method of the porous hollow fiber membrane of the present invention is not particularly limited so long as a porous hollow fiber membrane satisfying the above-described desired characteristics is obtained. For example, it can be produced by the following method.

(2-1) Preparation of Supporting Layer Raw Liquid

In the case where the porous hollow fiber membrane of the present invention includes the supporting layer, a preparation method of a supporting layer raw liquid is described below. A material constituting the supporting layer is not particularly limited so long as the above-described object can be achieved. A production method of the supporting layer using a fluororesin will be described as an example.

First of all, the fluororesin is dissolved in a poor solvent or a good solvent with respect to the fluororesin at a relatively high temperature of a crystallization temperature or higher, thereby preparing the supporting layer raw liquid.

When the polymer concentration in the supporting layer raw liquid is high, a supporting layer with high strength is obtained. Meanwhile, when the polymer concentration is low, a porosity of the supporting layer becomes large, and the pure-water permeation performance is enhanced. For this reason, the concentration of the fluororesin is preferably 20 to 60% by mass, and more preferably 30 to 50% by mass.

The poor solvent as referred to in this specification is defined as a solvent which cannot dissolve the fluororesin to an extent of 5% by mass or more at a low temperature of lower than 60°C but can dissolve the fluororesin to an extent of 5% by mass or more in a high temperature region of 60°C or higher and not higher than a melting point of the fluororesin (for example, about 178°C in the case where the polymer is constituted of PVDF alone).

The good solvent as referred to in this specification is a solvent which is able to dissolve the fluororesin to an extent of 5% by mass or more even in a low temperature region of lower than 60°C. In addition, the non-solvent as referred to herein is defined as a solvent which neither dissolves nor swells the fluororesin until it reaches a melting point of the fluororesin or a boiling point of the solvent.

Examples of the poor solvent with respect to the fluororesin include cyclohexanone, isophorone, γ-butyrolactone (hereinafter referred to as "GBL"), methyl isoamyl ketone, propylene carbonate, dimethyl sulfoxide, methyl ethyl ketone, acetone, and tetrahydrofuran, and mixed solvents thereof.

Examples of the good solvent include N-methyl-2-pyrrolidone (hereinafter referred to as "NMP"), dimethylacetamide, dimethylformamide (hereinafter referred to as "DMF"), tetramethylurea, and trimethyl phosphate, and mixed solvents thereof.

Examples of the non-solvent include water, an aliphatic hydrocarbon, an aromatic hydrocarbon, an aliphatic polyhydric alcohol, an aromatic polyhydric alcohol, a chlorinated hydrocarbon, and other chlorinated organic liquid, such as hexane, pentane, benzene, toluene, methanol, ethanol, carbon tetrachloride, o-dichlorobenzene, trichloroethylene, ethylene glycol, diethylene glycol, triethylene glycol, propylene glycol, butylene glycol, pentanediol, hexanediol, and a low-molecular weight polyethylene glycol, and mixed solvents thereof.

(2-2) Formation of Supporting Layer

From the viewpoint of pure-water permeation performance and physical strength, it is preferred that the supporting layer of the present invention has a spherical structure, or a columnar structure in which the supporting layer is oriented in the longitudinal direction of the porous hollow fiber membrane. In order to form the supporting layer having such a structure from the above-described supporting layer raw liquid, there is, for example, a method utilizing a thermally induced phase separation method for inducing phase separation owing to a temperature change.

As for the thermally induced phase separation method, two kinds of phase separation mechanisms are mainly utilized. One of them is a liquid-liquid phase separation method in which a polymer solution having been dissolved uniformly at a high temperature is separated into a polymer dense phase and a polymer dilute phase due to reduction in the dissolving ability of the solution during temperature drop, and the structure is then fixed by crystallization. The other is a solid-liquid phase separation method in which a polymer solution having been dissolved uniformly at a high temperature is phase-separated into a polymer solid phase and a solvent phase due to occurrence of crystallization of the polymer during temperature drop.

A three-dimensional network structure is mainly formed in the former liquid-liquid phase separation method, and a spherical structure or a columnar structure is mainly formed in the latter solid-liquid phase separation method. In the production of the supporting layer of the present invention, the phase separation mechanism of the latter solid-liquid phase separation method is preferably utilized, and a polymer concentration and a solvent from which the solid-liquid phase separation are induced is selected.

As a specific method, a hollow portion-forming liquid is ejected from an inner tube of a double tube-type spinneret for spinning of a porous hollow fiber membrane while ejecting the above-described supporting layer raw liquid from an outer tube of the double tube-type spinneret. The thus ejected supporting layer raw liquid is cooled and solidified in a cooling bath, to obtain the supporting layer having a hollow portion, which has a spherical structure or a columnar structure.

For the cooling bath, a mixed solvent including a poor solvent or a good solvent in a concentration of 50 to 95% by mass and a non-solvent in a concentration of 5 to 50% by mass is preferably used. Furthermore, as the poor solvent or good solvent, use of the same poor solvent or good solvent as that for the supporting layer raw liquid is preferably adopted. In order to form the structure by the thermally induced phase separation method, a temperature of the cooling bath is preferably -10 to 30°c, and more preferably -5 to 15°C.

Similar to the cooling bath, a mixed solvent including a poor solvent or a good solvent in a concentration of 50 to 95% by mass and a non-solvent in a concentration of 5 to 50% by mass is preferably used for the hollow portion-forming liquid. Furthermore, as the poor solvent or good solvent, use of the same poor solvent or good solvent as that for the supporting layer raw liquid is preferably adopted. Although the hollow portion-forming liquid may be fed after being cooled, in the case where the hollow fiber membrane is thoroughly solidified by only a cooling power of the cooling bath, the hollow portion-forming liquid may be fed without being cooled.

In addition to the foregoing production process, in order to enlarge the void to enhance the permeation performance and also to strengthen the breaking strength, it is also useful and preferable to perform drawing of the supporting layer. The drawing is performed by a usual tenter method, roll method, or rolling method, etc., or a combination thereof. A draw ratio is preferably 1.1 to 4 times, and more preferably 1.1 to 3 times. A temperature range during drawing is preferably 50 to 140°C, more preferably 55 to 120°C, and still more preferably 60 to 100°C. In the case of performing the drawing in a low-temperature atmosphere at lower than 50°C, it is difficult to stably and homogenously perform the drawing. Conversely, in the case of performing the drawing at a temperature of higher than 140°C, the temperature is close to the melting point of the fluororesin, and therefore, the structure texture is melted, the void is not enlarged, and the pure-water permeation performance is not enhanced.

Although performing the drawing in a liquid is preferred because it is easy to control the temperature, the drawing may also be performed in a gas such as steam. As the liquid, water is simple and preferred, but in the case of performing the drawing at about 90°C or higher, use of a low-molecular weight polyethylene glycol, etc. can also be preferably adopted. In the case of not performing such drawing, though the permeation performance and breaking strength are lowered, the breaking elongation is enhanced, as compared with the case of performing the drawing. In consequence, the presence or absence of the drawing step and the draw ratio in the drawing step can be appropriately set according to the usage of the porous hollow fiber membrane.

(2-3) Preparation of Separation Functional Layer Raw Liquid

The porous hollow fiber membrane of the present invention includes a separation functional layer containing a fluororesin for the purpose of filtrating micro objects such as a virus. A preparation method of a separation functional layer raw liquid is hereunder described.

The separation functional layer raw liquid is obtained by dissolving the fluororesin in a good solvent with respect to the fluororesin. When the polymer concentration in the separation functional layer raw liquid is high, the structure of the separation functional layer becomes dense, and a membrane having high separation performance is obtained. Conversely, when the polymer concentration is low, the porosity of the separation functional layer becomes large, and the pure-water permeation performance is enhanced. For this reason, the concentration of the fluororesin is preferably 8 to 30% by mass, and more preferably 10 to 20% by mass.

In order to enhance the pure-water permeation performance and contamination resistance of the porous hollow fiber membrane, it can also be preferably adopted to add, in addition to the fluororesin, a hydrophilic polymer to the separation functional layer raw liquid. In this case, the hydrophilic polymer may be dissolved in the good solvent with respect to the fluororesin together with the fluororesin. The hydrophilic polymer to be added herein is the same as that described above. Among them, from the viewpoint of enhancement in contamination resistance, the hydrophilic polymer is preferably at least one hydrophilic polymer selected from the group consisting of a polyvinylpyrrolidone-based resin, an acrylic resin, and a cellulose ester-based resin.

A mass ratio of the fluororesin to the hydrophilic polymer in the separation functional layer raw liquid is preferably in a range of 60/40 to 99/1, more preferably in a range of 65/35 to 95/5, and still more preferably in a range of 70/30 to 90/10. When the mass ratio is 60/40 or more, the chemical resistance of the porous hollow fiber membrane becomes favorable. When the mass ratio is 99/1 or less, the pure-water permeation performance and the contamination resistance become favorable.

A viscosity of the separation functional layer raw liquid of the present invention is preferably 20 to 500 Pa·sec, more preferably 30 to 300 Pa·sec, and still more preferably 40 to 150 Pa·sec. In the case where the viscosity is less than 20 Pa·sec, coarse pores are liable to be formed on the surface of the resulting separation functional layer, and it becomes difficult to exhibit a high virus removal performance. On the other hand, in the case where the viscosity is more than 500 Pa·sec, the formability is lowered, and a membrane defect is liable to be formed in the resulting separation functional layer.

(2-4) Defoaming of Separation Functional Layer Raw Liquid

In the present invention, in the case of thoroughly defoaming the separation functional layer raw liquid obtained in the above-described method, a separation functional layer having a small number of foaming points can be formed and an excellent virus removal performance can be exhibited, and hence, such a case is preferred.

A coefficient of variation of $OD_{600}$ of the separation functional layer raw liquid of the present invention after the defoaming treatment is preferably 5% or less, and more preferably 2% or less. The "$OD_{600}$" as referred to herein means an optical density at a wavelength of 600 nm, and the $OD_{600}$ is calculated by the following expression (2) from an incident light quantity ($I_{600}$) and a transmitted light quantity ($T_{600}$) measured with a spectrophotometer when the separation functional layer raw liquid is irradiated with light having a wavelength of 600 nm.

$$OD_{600} = -\log_{10}(T_{600}/I_{600}) \qquad (2)$$

In the case of irradiating the separation functional layer raw liquid with light, when foams or the like are existent in its optical path, the light is scattered by them and the transmitted light quantity ($T_{600}$) is decayed, and therefore, the value of $OD_{600}$ increases.

The coefficient of variation as referred to herein is a dimensionless quantity obtained by dividing a standard deviation by an average value, and it is meant that as this value is small, the measured value is constant. The "coefficient of variation of $OD_{600}$" as referred to herein means a coefficient of variation obtained by measuring the $OD_{600}$ 20 times with respect to the separation functional layer raw liquid which is a measuring object, and then calculating the coefficient of variation from the standard deviation and the average value of the measured values. In order that the coefficient of variation of $OD_{600}$ is 5% or less, the separation functional layer raw liquid is required to be clear such that foams or the like having a size of 10 μm or more, the value of which is detectable with a spectrophotometer, hardly exist. The separation functional layer obtained by solidifying such a clear separation functional layer raw liquid has very few membrane defects and has excellent completeness in the filtration of a virus, etc.

For the above-described separation functional layer raw liquid having a viscosity of 20 to 500 Pa·sec, in general, the coefficient of variation of $OD_{600}$ exceeds 5% from the reason that, for example, the foams hardly float. However, even in such a case, when the removal of foams is performed by means of defoaming of the separation functional layer raw liquid, there is a case where a separation functional layer raw liquid having a coefficient of variation of $OD_{600}$ of 5% or less is obtained.

Although examples of a method for defoaming the separation functional layer raw liquid include static defoaming, vacuum defoaming, and ultrasonic defoaming, vacuum defoaming is preferred because equipment is simple and fine foams can be defoamed within a short time.

Although a defoaming time varies depending on the viscosity of the separation functional layer raw liquid and the shape of a storage container thereof, etc., in the case of static defoaming, the defoaming time is preferably 6 hours or more, and more preferably 12 hours or more. In addition, in the case of vacuum defoaming, the defoaming time is preferably 30 minutes or more, and more preferably one hour or more.

Although a defoaming temperature is required to be lower than the boiling point of the solvent which the separation functional layer raw liquid contains, it is preferably 40 to 130°C, more preferably 50 to 110°C, and still more preferably 60 to 100°C. In the case where the defoaming temperature is lower than 40°C, the viscosity of the separation functional layer raw liquid is high, so that the defoaming may not be thoroughly achieved. On the other hand, in the case where the defoaming temperature is higher than 130°C, the solvent is liable to be volatilized, so that the concentration of the separation functional layer raw liquid may change during defoaming.

(2-5) Formation of Separation Functional Layer

In the present invention, it is preferred to form the separation functional layer having a three-dimensional network structure with excellent separation performance from the separation functional layer raw liquid obtained by the above-described method. Examples of a method for forming the separation functional layer for the purpose of obtaining the separation functional layer having a three-dimensional network structure include a non-solvent induced phase separation method in which phase separation is induced through contact with the non-solvent with respect to the fluororesin which the separation functional layer raw liquid serving as a raw material contains.

In the case of producing a single-layer porous hollow fiber membrane including a separation functional layer alone, a hollow portion-forming liquid is ejected from an inner tube of a double tube-type spinneret for spinning of a porous hollow fiber membrane while ejecting the above-described separation functional layer raw liquid from an outer tube of the double tube-type spinneret. Thus ejected separation functional layer raw liquid is solidified in a solidification bath to obtain the porous hollow fiber membrane.

In the case of producing a porous hollow fiber membrane having a multilayer structure in which the supporting layer and the separation functional layer are laminated, the porous hollow fiber membrane can be obtained by uniformly applying the separation functional layer raw liquid on the surface of the supporting layer which is formed beforehand and then solidifying the separation functional layer raw liquid in a solidification bath. Examples of a method for applying the separation functional layer raw liquid on the supporting layer include a method for immersing the supporting layer in the separation functional layer raw liquid. Examples of a method for controlling the amount of the separation functional layer raw liquid to be applied on the supporting layer include a method in which the separation functional layer raw liquid is applied and then passed through the inside of a nozzle to scrape a part of the solution, or a part of the separation functional layer raw liquid is blown off by an air knife.

As another production method of a porous hollow fiber membrane having a multilayer structure in which the supporting layer and the separation functional layer are laminated, a method of simultaneously ejecting the separation functional layer raw liquid and the supporting layer raw liquid from a triple tube-type spinneret and then solidifying them is also preferably adopted. That is, in the case of producing a composite hollow fiber membrane in which the separation functional layer is disposed for an outer layer of the hollow fiber membrane, and the supporting layer is disposed for an inner layer of the hollow fiber membrane, the desired composite hollow fiber membrane can be obtained by simultaneously ejecting the separation functional layer raw liquid from an outer tube, the supporting layer raw liquid from an intermediate tube, and the hollow portion-forming liquid from on inner tube respectively, and then solidifying them in a solidification bath.

Here, it is preferred that the above-described solidification bath contains the non-solvent with respect to the fluororesin. When the separation functional layer raw liquid comes into contact with the non-solvent, the non-solvent induced phase separation occurs, and a three-dimensional network structure is formed. The solidification bath may contain a good solvent or a poor solvent with respect to the fluororesin in a proportion within a range of 0 to 50%.

In the present invention, in the case of regulating the temperature of the solidification bath to a low temperature, a separation functional layer with appropriately controlled asymmetry, which is able to make both the virus removal performance and the pure-water permeation performance compatible with each other in a high level, can be formed, and hence, such a case is preferred. As the temperature of the solidification bath is low, the mobility of a polymer chain is lowered, and therefore, it may be considered that the pore diameter coarsening speed in the non-solvent induced phase separation is suppressed, and the asymmetry of the separation functional layer becomes small. The temperature of the solidification bath is preferably -5 to 35°C, more preferably 0 to 15°C, and still more preferably 0 to 10°C. By appropriately controlling the temperature of the solidification bath, it become possible to form the separation functional layer in which the average pore diameter X in the vicinity of the surface of the dense layer and the average pore diameter Y of the inner layer satisfy a relation of $1.5 \leq Y/X \leq 5$.

In this way, according to the above-described method, a porous hollow fiber membrane including a separation functional layer having a three-dimensional network structure in which a dense layer is provided on either one of the surfaces in the thickness direction, a gas diffusion amount in the diffusion test is 0.5 to 5.0 mL/m$^2$/hr, and the number of foaming points in the foaming test under immersion with 2-propanol is 0.005 to 0.2 per cm$^2$ can be produced.

EXAMPLES

The present invention is hereunder described by reference to specific Examples, but it should be construed that the present invention is by no means limited by these Examples.

Physical properties values regarding the present invention can be measured by the following methods.

(1) Pure-Water Permeation Performance

A small-sized module which is the evaluation target including 4 porous hollow fiber membranes and having an effective length of 200 mm was prepared. Distilled water was delivered to the small-sized module for 10 minutes under a condition at a temperature of 25°C and a filtration pressure difference of 16 kPa, and the obtained permeated water amount (m$^3$) was measured, expressed in terms of a value per unit time (hr) and effective membrane area (m$^2$), further expressed in terms of a pressure (50 kPa), and designated as the pure-water permeation performance (m$^3$/m$^2$/hr). The effective membrane area was calculated from the outer diameter and the effective length of the porous hollow fiber membrane.

(2) Virus Removal Performance

Bacteriophage MS-2 ATCC 15597-B1 (MS-2 phage, particle diameter: about 25 nm) that is a virus for test was added to sterilized distilled water, to prepare a test raw liquid containing the MS-2 phage in a concentration of about 1.0 $\times$ 10$^7$ PFU/mL. This test raw liquid was filtrated with the small-sized module used in (1) under a condition at a temperature of 25°C and a filtration pressure difference of 100 kPa; the diluted raw liquid and 1 mL of the filtrate were each inoculated on an assay petri dish in accordance with the method of Overlay agar assay, Standard Method 9211-D (APHA, 1998, Standard methods for the examination of water and wastewater, 18th ed.); and the number of plaques was then counted, to determine the concentrations of the MS-2 phage before and after the filtration test. Using these concentrations, the virus removal performance (log) was calculated according to the above-described expression (1).

(3) Foaming Point and Bubble Point Pressure

The small-sized module prepared in the paragraph of "(1) Pure-Water Permeation Performance" was filled with 2-propanol and allowed to stand for 30 minutes, thereby completely wetting the porous hollow fiber membrane with 2-propanol. An air pressure was gradually applied to an extent of 300 kPa from the inside under a condition at a temperature of 25°C, and a pressure when a foam was first generated from the membrane surface was designated as the bubble point pressure. From a balance with the pressure resistance of the porous hollow fiber membrane, in the case where no foam was generated until 300 kPa, the bubble point pressure was designated to be 300 kPa or more. Subsequently, the number of places where the foam was generated while an air pressure of 300 kPa was continuously applied for one minute was counted, expressed in terms of a numerical value per an effective membrane area (cm$^2$), and designated as the number of foaming points (per cm$^2$). In the case where the number of bubble points was more than 3 per cm$^2$, it became difficult to specify the generation place of each foam and a precise foaming point could not be determined, and therefore, the number of foaming points was designated to be 3 or more per cm$^2$.

(4) Gas Diffusion Amount

A large-sized module including 100 porous hollow fiber membranes and having an effective length of 2 m was prepared. This module was filled with pure water and subjected to external pressure filtration at a pressure difference of 100 kPa for 5 minutes, thereby completely wetting the porous hollow fiber membrane with pure water. An air pressure of 100 kPa was applied for one hour from the inside under a condition at a temperature of 25°C, and the amount (mL) of the pumped air was measured, expressed in terms of a numerical value per an effective membrane area (m²), and designated as the gas diffusion amount (mL/m²/hr). At this time, it was confirmed that no foam was generated from the membrane surface, namely the air pressure was less than the bubble point pressure under immersion with pure water.

(5) Average Pore Diameters X and Y

A cross section vertical to the longitudinal direction of the porous hollow fiber membrane was photographed with a scanning electron microscope (SU1510, manufactured by Hitachi High-Technologies Corporation) at a magnification of 10,000 times. With respect to each of cross-sectional photographs of 10 or more places randomly selected, the diameters of randomly selected 20 pores in a site of 1 to 2 μm far in the thickness direction from the surface at the dense layer side of the separation functional layers were measured and number-averaged, to designate as an average pore diameter X (nm). In addition, with respect to each of the above-described cross-sectional photographs, the diameters of randomly selected 20 pores in a site of 5 to 6 μm far in the thickness direction from the surface at the dense layer side of the separation functional layers were measured and number-averaged, to designate as an average pore diameter Y (nm). In the case where the pore was not circular, a circle (equivalent circle) having an area equal to the area which the pore had was determined with an image processing software, and the diameter of the equivalent circle was designated as a diameter of pore.

(6) Average Surface Pore Diameter

The surface at the dense layer side of the separation functional layer was photographed with a scanning electron microscope at a magnification of 60,000 times. With respect to the surface photographs of randomly selected 10 places, the diameters of randomly selected 30 pores were measured and number-averaged, to designate as an average surface pore diameter (nm). In the case where the pore was not circular, a circle (equivalent circle) having an area equal to the area which the pore had was determined with an image processing software, and the diameter of the equivalent circle was designated as a diameter of pore.

(7) Thickness of Separation Functional Layer

A cross section vertical to the longitudinal direction of the porous hollow fiber membrane was photographed with a scanning electron microscope at a magnification of 60 times. With respect to the cross-sectional photographs of randomly selected 10 places, an outer diameter and an inner diameter of each of the separation functional layer were measured, and values calculated according to the following expression (3) were averaged, to designate as a thickness (μm) of the separation functional layer. In the case where the cross section was oval, an average value of the major axis and the short axis was designated as an outer diameter or an inner diameter.

$$\text{Thickness of separation functional layer (μm)} = \{(\text{Outer diameter of separation functional layer}) - (\text{Inner diameter of separation functional layer})\}/2 \quad (3)$$

(8) Breaking Strength and Breaking Elongation

The porous hollow fiber membrane was cut out in a length of 110 mm in the longitudinal direction, to prepare a sample. Using a tensile tester (TENSILON (registered trademark)/RTG-1210, manufactured by Toyo Baldwin Co., Ltd.), a sample having a measurement length of 50 mm was measured 5 times at a tensile speed of 50 mm/min by changing the sample in an atmosphere at 25°C, and average values of breaking strength (MPa) and breaking elongation (%) were determined.

(9) Coefficient of Variation of $OD_{600}$

The separation functional layer raw liquid was charged in a quartz cell having an optical path length of 1 cm and irradiated with light having a wavelength of 600 nm by using a spectrophotometer (UV-2450, manufactured by Shimadzu Corporation), and the $OD_{600}$ was calculated from an incident light quantity ($I_{600}$) and a transmitted light quantity ($T_{600}$) according to the above-described expression (2). Subsequently, the separation functional layer raw liquid in the quartz cell was exchanged, and the same measurement was repeated 20 times in total. By dividing a standard deviation of these measured values by the average value, the coefficient of variation of $OD_{600}$ was calculated.

(10) Viscosity

The viscosity of the separation functional layer raw liquid in an atmosphere at 50°C was measured with a rheometer (MCR301, manufactured by Anton Paar GmbH) at a shear rate of 1 sec$^{-1}$ in conformity with JIS Z8803, Part 10 (viscosity measurement method with a cone-plate rotational viscometer).

(Example 1)

36% by mass of PVDF (weight average molecular weight: 420,000) and 64% by mass of GBL were dissolved at 150°C, to obtain a supporting layer raw liquid. This supporting layer raw liquid was ejected from an outer tube of a double tube-type spinneret and an 85% by mass GBL aqueous solution was simultaneously ejected from an inner tube of the double tube-type spinneret, followed by being solidified in a bath made of 85% by mass GBL aqueous solution at 5°C. The resulting membrane was drawn at a ratio of 1.5 times in water at 95°C. The resulting membrane was a porous hollow fiber membrane having a spherical structure and had an outer diameter of 1,295 $\mu$m and an inner diameter of 770 $\mu$m. This membrane was hereinafter used as a supporting layer.

22% by mass of PVDF (weight average molecular weight: 280,000) and 78% by mass of NMP were dissolved at 120°C and then subjected to static defoaming at 100°C for 24 hours, to obtain a separation functional layer raw liquid. This separation functional layer raw liquid was uniformly applied on the surface of the above-described supporting layer and then solidified in water at 2°C, thereby preparing a porous hollow fiber membrane in which a separation functional layer having a three-dimensional network structure was formed on the supporting layer having a spherical structure. A thickness of the separation functional layer of the resulting porous hollow fiber membrane was 48 $\mu$m. The membrane performance of the resulting porous hollow fiber membrane is shown in Table 1.

(Example 2)

25% by mass of PVDF (weight average molecular weight: 420,000) and 75% by mass of NMP were dissolved at 120°C and then subjected to static defoaming at 100°C for 30 hours, to obtain a separation functional layer raw liquid. This separation functional layer raw liquid was uniformly applied on the surface of the supporting layer obtained in Example 1 and then solidified in water at 2°C, thereby preparing a porous hollow fiber membrane in which a separation functional layer having a three-dimensional network structure was formed on the supporting layer having a spherical structure. A thickness of the separation functional layer of the resulting porous hollow fiber membrane was 44 $\mu$m. The membrane performance of the resulting porous hollow fiber membrane is shown in Table 1.

(Example 3)

25% by mass of PVDF (weight average molecular weight: 420,000) and 75% by mass of DMF were dissolved at 100°C and then subjected to vacuum defoaming at 80°C for 3 hours, to obtain a separation functional layer raw liquid. This separation functional layer raw liquid was uniformly applied on the surface of the supporting layer obtained in Example 1 and then solidified in water at 5°C, thereby preparing a porous hollow fiber membrane in which a separation functional layer having a three-dimensional network structure was formed on the supporting layer having a spherical structure. A thickness of the separation functional layer of the resulting porous hollow fiber membrane was 59 $\mu$m. The membrane performance of the resulting porous hollow fiber membrane is shown in Table 1.

(Example 4)

18% by mass of PVDF (weight average molecular weight: 420,000), 6% by mass of PMMA (weight average molecular weight: 350,000), and 76% by mass of NMP were dissolved at 120°C and then subjected to vacuum defoaming at 100°C for 3 hours, to obtain a separation functional layer raw liquid. This separation functional layer raw liquid was uniformly applied on the surface of the supporting layer obtained in Example 1 and then solidified in water at 2°C, thereby preparing a porous hollow fiber membrane in which a separation functional layer having a three-dimensional network structure was formed on the supporting layer having a spherical structure. A thickness of the separation functional layer of the resulting porous hollow fiber membrane was 35 $\mu$m. The membrane performance of the resulting porous hollow fiber membrane is shown in Table 1.

(Example 5)

15% by mass of PVDF (weight average molecular weight: 670,000), 5% by mass of PMMA (weight average molecular weight: 350,000), and 80% by mass of DMF were dissolved at 100°C and then subjected to vacuum defoaming at 80°C for 6 hours, to obtain a separation functional layer raw liquid. This separation functional layer raw liquid was uniformly applied on the surface of the supporting layer obtained in Example 1 and then solidified in water at 15°C, thereby preparing a porous hollow fiber membrane in which a separation functional layer having a three-dimensional network structure was formed on the supporting layer having a spherical structure. A thickness of the separation functional layer of the resulting porous hollow fiber membrane was 71 $\mu$m. The membrane performance of the resulting porous hollow fiber membrane is shown in Table 1.

(Example 6)

15% by mass of PVDF (weight average molecular weight: 670,000), 5% by mass of CA (weight average molecular weight: 30,000), and 80% by mass of NMP were dissolved at 120°C and then subjected to static defoaming at 100°C for 24 hours, to obtain a separation functional layer raw liquid. This separation functional layer raw liquid was uniformly applied on the surface of the supporting layer obtained in Example 1 and then solidified in water at 15°C, thereby preparing a porous hollow fiber membrane in which a separation functional layer having a three-dimensional network structure was formed on the supporting layer having a spherical structure. A thickness of the separation functional layer of the resulting porous hollow fiber membrane was 61 $\mu$m. The membrane performance of the resulting porous hollow fiber membrane is shown in Table 1. The measurement results of $OD_{600}$ are shown in FIG. 2.

(Example 7)

16% by mass of PVDF (weight average molecular weight: 670,000), 4% by mass of CA (weight average molecular weight: 30,000), and 80% by mass of DMF were dissolved at 100°C and then subjected to vacuum defoaming at 80°C for 6 hours, to obtain a separation functional layer raw liquid. This separation functional layer raw liquid was uniformly applied on the surface of the supporting layer obtained in Example 1 and then solidified in water at 5°C, thereby preparing a porous hollow fiber membrane in which a separation functional layer having a three-dimensional network structure was formed on the supporting layer having a spherical structure. A thickness of the separation functional layer of the resulting porous hollow fiber membrane was 63 $\mu$m. The membrane performance of the resulting porous hollow fiber membrane is shown in Table 1. A photograph of a cross section vertical to the longitudinal direction of the resulting porous hollow fiber membrane is shown in FIG. 1.

(Example 8)

18% by mass of PVDF (weight average molecular weight: 420,000), 6% by mass of PMMA (weight average molecular weight: 350,000), and 76% by mass of NMP were dissolved at 120°C and then subjected to vacuum defoaming at 100°C for 6 hours, to obtain a separation functional layer raw liquid. This separation functional layer raw liquid was ejected from an outer tube of a double tube-type spinneret, and a 70% by mass NMP aqueous solution was simultaneously ejected from an inner tube of the double tube-type spinneret, followed by being solidified in a water at 5°C, thereby preparing a porous hollow fiber membrane including only a separation functional layer. The resulting porous hollow fiber membrane had an outer diameter of 890 $\mu$m and an inner diameter of 573 $\mu$m, and the separation functional layer had a thickness of 159 $\mu$m. The membrane performance of the resulting porous hollow fiber membrane is shown in Table 1.

(Comparative Example 1)

22% by mass of PVDF (weight average molecular weight: 280,000) and 78% by mass of NMP were dissolved at 120°C, to obtain a separation functional layer raw liquid. This separation functional layer raw liquid was uniformly applied on the surface of the supporting layer obtained in Example 1 and then solidified in water at 15°C, thereby preparing a porous hollow fiber membrane in which a separation functional layer having a three-dimensional network structure was formed on the supporting layer having a spherical structure. A thickness of the separation functional layer of the resulting porous hollow fiber membrane was 42 $\mu$m. The membrane performance of the resulting porous hollow fiber membrane is shown in Table 2. The measurement results of $OD_{600}$ are shown in FIG. 2.

(Comparative Example 2)

13% by mass of PVDF (weight average molecular weight: 280,000), 4% by mass of CA (weight average molecular weight: 30,000), and 83% by mass of NMP were dissolved at 120°C, to obtain a separation functional layer raw liquid. This separation functional layer raw liquid was uniformly applied on the surface of the supporting layer obtained in Example 1 and then solidified in water at 15°C, thereby preparing a porous hollow fiber membrane in which a separation functional layer having a three-dimensional network structure was formed on the supporting layer having a spherical structure. A thickness of the separation functional layer of the resulting porous hollow fiber membrane was 35 $\mu$m. The membrane performance of the resulting porous hollow fiber membrane is shown in Table 2.

(Comparative Example 3)

25% by mass of PVDF (weight average molecular weight: 420,000) and 75% by mass of NMP were dissolved at 120°C and then subjected to vacuum defoaming at 100°C for 3 hours, to obtain a separation functional layer raw liquid. This separation functional layer raw liquid was uniformly applied on the surface of the supporting layer obtained in Example 1 and then solidified in water at 60°C, thereby preparing a porous hollow fiber membrane in which a separation functional layer having a three-dimensional network structure was formed on the supporting layer having a spherical structure. A thickness of the separation functional layer of the resulting porous hollow fiber membrane was 40 $\mu$m. The membrane performance of the resulting porous hollow fiber membrane is shown in Table 2.

(Comparative Example 4)

15% by mass of PVDF (weight average molecular weight: 670,000), 5% by mass of PMMA (weight average molecular weight: 350,000), and 80% by mass of DMF were dissolved at 100°C and then subjected to static defoaming at 80°C for 24 hours, to obtain a separation functional layer raw liquid. This separation functional layer raw liquid was uniformly applied on the surface of the supporting layer obtained in Example 1 and then solidified in water at 5°C, thereby preparing a porous hollow fiber membrane in which a separation functional layer having a three-dimensional network structure was formed on the supporting layer having a spherical structure. A thickness of the separation functional layer of the resulting porous hollow fiber membrane was 11 $\mu$m. The membrane performance of the resulting porous hollow fiber membrane is shown in Table 2.

(Comparative Example 5)

28% by mass of PVDF (weight average molecular weight: 420,000) and 72% by mass of NMP were dissolved at 140°C and then subjected to vacuum defoaming at 100°C for 12 hours, to obtain a separation functional layer raw liquid. This separation functional layer raw liquid was uniformly applied on the surface of the supporting layer obtained in Example 1 and then solidified in water at 2°C, thereby preparing a porous hollow fiber membrane in which a separation functional layer having a three-dimensional network structure was formed on the supporting layer having a spherical structure. A thickness of the separation functional layer of the resulting porous hollow fiber membrane was 45 $\mu$m. The membrane performance of the resulting porous hollow fiber membrane is shown in Table 2.

(Comparative Example 6)

27% by mass of PVDF (weight average molecular weight: 670,000) and 73% by mass of NMP were dissolved at 140°C and then subjected to static defoaming at 100°C for 3 hours, to obtain a separation functional layer raw liquid. This separation functional layer raw liquid was uniformly applied on the surface of the supporting layer obtained in Example 1 and then solidified in water at 2°C, thereby preparing a porous hollow fiber membrane in which a separation functional layer having a three-dimensional network structure was formed on the supporting layer having a spherical structure. A thickness of the separation functional layer of the resulting porous hollow fiber membrane was 38 $\mu$m. The membrane performance of the resulting porous hollow fiber membrane is shown in Table 2.

(Comparative Example 7)

38% by mass of PVDF (weight average molecular weight: 420,000) and 62% by mass of GBL were dissolved at 160°C, to obtain a supporting layer raw liquid. This supporting layer raw liquid was ejected from an outer tube of a double tube-type spinneret, and an 85% by mass GBL aqueous solution was simultaneously ejected from an inner tube of the double tube-type spinneret, thereby being solidified in a bath made of 85% by mass GBL aqueous solution at 10°C. The resulting membrane was drawn at a ratio of 1.5 times in water at 95°C. The resulting membrane was a porous hollow fiber membrane having a spherical structure and had an outer diameter of 1,282 $\mu$m and an inner diameter of 758 $\mu$m. This member was hereinafter used as a supporting layer.

12% by mass of PVDF (weight average molecular weight: 600,000), 3% by mass of CA (weight average molecular weight: 30,000), and 85% by mass of NMP were dissolved at 140°C and then subjected to vacuum defoaming at 100°C for 6 hours, to obtain a separation functional layer raw liquid. This separation functional layer raw liquid was uniformly applied on the surface of the above-described supporting layer and then solidified in water at 25°C, thereby preparing a porous hollow fiber membrane in which a separation functional layer having a three-dimensional network structure was formed on the supporting layer having a spherical structure. A thickness of the separation functional layer of the resulting porous hollow fiber membrane was 60 $\mu$m. The membrane performance of the resulting porous hollow fiber membrane is shown in Table 2.

Table 1

| | | Unit | Example 1 | Example 2 | Example 3 | Example 4 | Example 5 | Example 6 | Example 7 | Example 8 |
|---|---|---|---|---|---|---|---|---|---|---|
| Supporting layer | Concentration of polymer | wt% | 36 | 36 | 36 | 36 | 36 | 36 | 36 | - |
| Separation functional layer | Molecular weight of PVDF | - | 280,000 | 420,000 | 420,000 | 420,000 | 670,000 | 670,000 | 670,000 | 420,000 |
| | Concentration of PVDF | wt% | 22 | 25 | 25 | 18 | 15 | 15 | 16 | 18 |
| | Hydrophilic polymer | - | - | - | - | PMMA | PMMA | CA | CA | PMMA |
| | Concentration of hydrophilic polymer | wt% | - | - | - | 6 | 5 | 5 | 4 | 6 |
| | Solvent | - | NMP | NMP | DMF | NMP | DMF | NMP | DMF | NMP |
| | Defoaming method | - | Static | Static | Vacuum | Vacuum | Vacuum | Static | Vacuum | Vacuum |
| | Defoaming temperature | °C | 100 | 100 | 80 | 100 | 80 | 100 | 80 | 100 |
| | Defoaming time | hr | 24 | 30 | 3 | 3 | 6 | 24 | 6 | 6 |
| | Viscosity | Pa·sec | 21 | 42 | 34 | 60 | 54 | 41 | 53 | 45 |
| | Coefficient of variation of $OD_{600}$ | % | 0.5 | 1.6 | 1.3 | 1.5 | 2.2 | 1.0 | 0.9 | 1.2 |
| | Temperature of solidification bath | °C | 2 | 2 | 5 | 2 | 15 | 15 | 5 | 5 |
| | Thickness of separation functional layer | μm | 48 | 44 | 59 | 35 | 71 | 61 | 63 | 159 |
| | Average surface pore diameter | nm | 18 | 15 | 17 | 12 | 13 | 10 | 11 | 13 |
| | Y/X | - | 3.1 | 2.7 | 3.2 | 3.0 | 4.5 | 4.1 | 3.0 | 3.4 |
| Membrane performance | Gas diffusion amount | mL/m²/hr | 4.8 | 3.7 | 4.0 | 1.6 | 2.0 | 1.0 | 0.9 | 2.3 |
| | Bubble point pressure | kPa | 220 | 250 | 260 | ≥300 | 290 | ≥300 | ≥300 | 270 |
| | Number of foaming points | per cm² | 0.15 | 0.12 | 0.11 | 0.01 | 0.02 | 0.01 | 0.01 | 0.06 |
| | Virus removal performance | log | 4.2 | 4.6 | 4.9 | ≥7.0 | 4.2 | 4.8 | ≥7.0 | 6.0 |

EP 3 689 445 A1

| | Unit | Example 1 | Example 2 | Example 3 | Example 4 | Example 5 | Example 6 | Example 7 | Example 8 |
|---|---|---|---|---|---|---|---|---|---|
| Pure-water permeation performance | $m^3/m^2/hr$ | 0.09 | 0.08 | 0.10 | 0.17 | 0.20 | 0.28 | 0.25 | 0.19 |
| Breaking strength | MPa | 11.7 | 12.1 | 10.4 | 9.7 | 9.2 | 10.3 | 10.2 | 1.6 |
| Breaking Elongation | % | 126 | 149 | 138 | 40 | 32 | 46 | 43 | 18 |

Table 2

| | | Unit | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Supporting layer | Concentration of polymer | wt% | 36 | 36 | 36 | 36 | 36 | 36 | 38 |
| Separation functional layer | Molecular weight of PVDF | - | 280,000 | 280,000 | 420,000 | 670,000 | 420,000 | 670,000 | 600,000 |
| | Concentration of PVDF | wt% | 22 | 13 | 25 | 15 | 28 | 27 | 12 |
| | Hydrophilic polymer | - | - | CA | - | PMMA | - | - | CA |
| | Concentration of hydrophilic polymer | wt% | - | 4 | - | 5 | - | - | 3 |
| | Solvent | - | NMP | NMP | NMP | DMF | NMP | NMP | NMP |
| | Defoaming method | - | - | - | Vacuum | Static | Vacuum | Static | Vacuum |
| | Defoaming temperature | °C | - | - | 100 | 80 | 100 | 100 | 100 |
| | Defoaming time | hr | - | - | 3 | 24 | 12 | 3 | 6 |
| | Viscosity | Pa·sec | 21 | 6 | 42 | 54 | 75 | 104 | 4 |
| | Coefficient of variation of $OD_{600}$ | % | 7.2 | 6.4 | 1.6 | 2.2 | 1.7 | 4.5 | 1.6 |
| | Temperature of solidification bath | °C | 15 | 15 | 60 | 5 | 2 | 2 | 25 |

| | | Unit | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| | Thickness of separation functional layer | $\mu$m | 42 | 35 | 40 | 11 | 45 | 38 | 60 |
| | Average surface pore diameter | nm | 22 | 20 | 33 | 15 | 8 | 6 | 30 |
| | Y/X | - | 4.8 | 4.4 | 9.3 | 3.5 | 2.8 | 2.7 | 8.0 |
| Membrane performance | Gas diffusion amount | mL/m$^2$/hr | 7.5 | 5.9 | 10.7 | 3.6 | 0.7 | 0.4 | 8.5 |
| | Bubble point pressure | kPa | 80 | 110 | 120 | 180 | $\geq$300 | 190 | $\geq$300 |
| | Number of foaming points | per cm$^2$ | $\geq$3.00 | 1.55 | $\geq$3.00 | 0.42 | 0.00 | 0.18 | 0.00 |
| | Virus removal performance | log | 2.5 | 3.0 | 2.2 | 3.4 | 6.3 | 4.4 | 2.2 |
| | Pure-water permeation performance | m$^3$/m$^2$/hr | 0.09 | 0.11 | 0.17 | 0.15 | 0.07 | 0.05 | 0.25 |
| | Breaking strength | MPa | 11.2 | 8.7 | 11.5 | 9.0 | 12.6 | 13.1 | 10.4 |
| | Breaking Elongation | % | 121 | 86 | 145 | 34 | 148 | 160 | 59 |

While the present invention has been described in detail and with reference to specific embodiments thereof, it will be apparent to one skilled in the art that various changes and modifications can be made therein without departing from the intention and scope of the present invention. This application is based on Japanese Patent Application (Patent Application No. 2017-188107) filed on September 28, 2017 and Japanese Patent Application (Patent Application No. 2018-120565) filed on June 26, 2018, the entirety of which is incorporated herein by way of reference.

INDUSTRIAL APPLICABILITY

In accordance with the present invention, a porous hollow fiber membrane having both high pure-water permeation performance and virus removal performance while providing excellent chemical durability owing to a fluororesin having high chemical resistance is provided. According to this, when applying to the water treatment field, by performing chemical cleaning, filtration capable of maintaining high virus removal performance and pure-water permeation performance over a long period of time can be performed.

**Claims**

1.    A porous hollow fiber membrane comprising a separation functional layer containing a fluororesin, the porous hollow fiber membrane having:

    a gas diffusion amount of 0.5 to 5.0 mL/m$^2$/hr in a diffusion test; and
    the number of foaming points of 0.005 to 0.2 per cm$^2$ in a foaming test under an immersion with 2-propanol.

2.    The porous hollow fiber membrane according to claim 1, wherein the separation functional layer has a three-dimensional network structure.

3.    The porous hollow fiber membrane according to claim 1 or 2, wherein the separation functional layer has a thickness of 15 $\mu$m or more.

4.    The porous hollow fiber membrane according to any one of claims 1 to 3, wherein:

    the separation functional layer comprises a dense layer on either one of surfaces thereof in a thickness direction;
    the separation functional layer has an average pore diameter X in a site of 1 $\mu$m to 2 $\mu$m far in the thickness direction from the surface at the dense layer side and an average pore diameter Y in a site of 5 $\mu$m to 6 $\mu$m far in the thickness direction from the surface at the dense layer side; and
    X and Y satisfy a relation of $1.5 \leq Y/X \leq 5$.

5.    The porous hollow fiber membrane according to any one of claims 1 to 4, wherein the separation functional layer has an average surface pore diameter of 3 nm to 20 nm.

6.    The porous hollow fiber membrane according to any one of claims 1 to 5, wherein the separation functional layer contains at least one hydrophilic polymer selected from the group consisting of a polyvinylpyrrolidone-based resin, an acrylic resin, and a cellulose ester-based resin.

7.    The porous hollow fiber membrane according to claim 6, wherein the hydrophilic polymer in the separation functional layer has a mass ratio of 1 to 40% by mass.

8.    The porous hollow fiber membrane according to any one of claims 1 to 7, further comprising a supporting layer.

9.    The porous hollow fiber membrane according to claim 8, wherein the supporting layer contains a fluororesin.

10.    A method for producing a porous hollow fiber membrane, comprising:

    (1) a step of defoaming a separation functional layer raw liquid containing a fluororesin and having a viscosity of 20 to 500 Pa·sec, to prepare a separation functional layer raw liquid having a coefficient of variation of OD$_{600}$ of 5% or less; and
    (2) a step of applying the separation functional layer raw liquid on a surface of a supporting layer, immersing the separation functional layer raw liquid in a solidification bath at -5 to 35°C, and thus forming a separation functional layer having a three-dimensional network structure by a non-solvent induced phase separation method, the separation functional layer comprising a dense layer on either one of surfaces thereof in a thickness direction, having a gas diffusion amount of 0.5 to 5.0 mL/m$^2$/hr in a diffusion test, and having the number of foaming points of 0.005 to 0.2 per cm$^2$ in a foaming test under an immersion with 2-propanol.

11. The method for producing a porous hollow fiber membrane according to claim 10, wherein:

the separation functional layer raw liquid contains at least one hydrophilic polymer selected from the group consisting of a polyvinylpyrrolidone-based resin, an acrylic resin, and a cellulose ester-based resin; and
the separation functional layer raw liquid has a mass ratio between the fluororesin and the hydrophilic polymer in a range of 60/40 to 99/1.

FIG. 1

5μm

FIG. 2

**INTERNATIONAL SEARCH REPORT**

| International application No. |
| --- |
| PCT/JP2018/036543 |

A. CLASSIFICATION OF SUBJECT MATTER

Int. Cl. B01D69/08(2006.01)i, B01D69/00(2006.01)i, B01D69/02(2006.01)i, B01D69/10(2006.01)i, B01D69/12(2006.01)i, B01D71/12(2006.01)i, B01D71/32(2006.01)i, B01D71/40(2006.01)i, B01D71/44(2006.01)i, D06M15/07(2006.01)i, D06M15/227(2006.01)i, D06M15/263(2006.01)i

According to International Patent Classification (IPC) or to both national classification and IPC

B. FIELDS SEARCHED

Minimum documentation searched (classification system followed by classification symbols)

Int. Cl. B01D69/08, B01D69/00, B01D69/02, B01D69/10, B01D69/12, B01D71/12, B01D71/32, B01D71/40, B01D71/44, D06M15/07, D06M15/227, D06M15/263

Documentation searched other than minimum documentation to the extent that such documents are included in the fields searched

Published examined utility model applications of Japan    1922-1996
Published unexamined utility model applications of Japan   1971-2018
Registered utility model specifications of Japan      1996-2018
Published registered utility model applications of Japan   1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2010-94670 A (TORAY INDUSTRIES, INC.) 30 April 2010, claims, examples (Family: none) | 1-9 |
| Y | | 10-11 |
| Y | JP 2012-200635 A (TORAY INDUSTRIES, INC.) 22 October 2012, paragraphs [0022], [0042] (Family: none) | 10-11 |
| Y | WO 2016/31834 A1 (ASAHI KASEI MEDICAL CO., LTD.) 03 March 2016, paragraphs [0073], [0112] & US 2017/0266626 A1, paragraphs [0174], [0246] & EP 3195922 A1 & KR 10-2016-0137628 A & CA 2959291 A1 & CN 106573203 A | 10-11 |

☒  Further documents are listed in the continuation of Box C.    ☐  See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| 31.10.2018 | 13.11.2018 |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |
| --- | --- |

Form PCT/ISA/210 (second sheet) (January 2015)

**INTERNATIONAL SEARCH REPORT**

| International application No. |
| --- |
| PCT/JP2018/036543 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 6-154567 A (MILLIPORE CORP) 03 June 1994, & US 5282380 A & EP 582822 A1 & DE 69317956 T2 | 1-11 |
| A | JP 2007-108178 A (MILLIPORE CORP.) 26 April 2007, & US 2007/0089489 A1 & EP 1775015 A1 & CN 1979124 A & AT 481157 T | 1-11 |

Form PCT/ISA/210 (continuation of second sheet) (January 2015)

**EP 3 689 445 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003026779 A
- WO 2015156401 A
- JP 2007289886 A
- JP 2017188107 A
- JP 2018120565 A

**Non-patent literature cited in the description**

- Standard methods for the examination of water and wastewater. APHA, 1998